# EUROPEAN PATENT APPLICATION

(11) **EP 4 831 568 A1**
(43) Date of publication of application: **28.10.2026**
(21) Application number: 25742118.0
(22) Date of filing: 07.01.2025
(51) Int. Cl.: F25D 23/12, F25D 11/02, F25D 25/02, F25C 1/24, B65D 25/38, F16K 15/02

(54) **REFRIGERATOR**

(30) Priority: 17.01.2024 KR 20240007336
(71) Applicant: LG Electronics Inc., Yeongdeungpo-gu Seoul 07336 (KR)
(72) Inventor: KANG, Sin Young, Seoul 08592 (KR)
(74) Representative: Vossius & Partner Patentanwälte Rechtsanwälte mbB
(86) International application number: PCT/KR2025/000353
(87) International publication number: WO 2025/155021

(57) **Abstract**

A refrigerator according to the present invention has a water container assembly which can be supported by a shelf in a storage chamber, so that a degree of freedom in utilizing a space in the storage chamber, for installing the water container assembly, may be improved.

## Description

### Technical Field

The present invention relates to a refrigerator including a water container assembly.

### Background Art

A refrigerator is a home appliance for supplying cold air generated using circulation of refrigerant to a storage chamber to keep various types of storage objects fresh for a long time.

The refrigerator may include an ice maker that produces ice using cold air, and the ice maker may pre-produce and store a certain amount of ice.

The ice maker may accommodate water from a water source or a water container in an ice tray and produce ice.

Generally, the water container may be mounted at a predetermined position, such as on a door or in a narrow space provided on one side surface of a storage drawer in a storage chamber.

When the water container is mounted at the predetermined position, the water container cannot be mounted at a position desired by a user, thus limiting a degree of freedom in utilizing a space.

Meanwhile, when water stored in the water container is supplied to the ice maker, the water stored in the water container needs to be pumped through a pump that generates water pressure, and thus, the mounting position of the water container can be restricted by a position of the pump, or the mounting position of the pump can be restricted by the mounting position of the water container.

### Disclosure

### Technical Problem

The present invention is directed to providing a refrigerator capable of increasing a degree of freedom in utilizing a space when a water container assembly is mounted.

In addition, the present invention is directed to providing a refrigerator in which a water container and a pump are assembled so that the water container and the pump can be easily mounted at desired positions.

In addition, the present invention is directed to providing a refrigerator in which a pump that pumps water stored in the water container to an ice maker can operate smoothly.

Objects of the present invention are not limited to the above object, and other objects and advantages of the present invention which are not mentioned can be understood by the following description and more clearly understood by various embodiments of the present invention. In addition, it will be readily appreciated that the objects and advantages of the present invention may be achieved by devices and combinations thereof that are described in the claims.

### Technical Solution

To achieve the above objects, a refrigerator according to an aspect of the present invention includes a cabinet including one or more storage chambers, one or more shelves within the storage chamber, and a water container assembly supported by the shelves and disposed within the storage chamber.

The water container assembly may include a case, a water container disposed on the case, and a pump fastened to the case.

A lower portion of the case may have an accommodation space in which the pump is disposed.

The case may be disposed to be in contact with a rear surface and one side surface of the storage chamber.

The refrigerator may further include an ice maker disposed in a storage chamber different from the storage chamber in which the water container assembly is disposed, wherein the water container assembly may be disposed below the ice maker.

The refrigerator may further include an ice maker disposed in a storage chamber different from the storage chamber in which the water container assembly is disposed, wherein the water container assembly may be disposed above the ice maker.

A water valve communicating with the pump may be further disposed in the case.

The water container may be detachably attached to the case by a vertical movement method.

The water container may include an opening and closing portion disposed on a bottom surface thereof, and when the water container is mounted in the case, the opening and closing portion may communicate with a passage formed in the case.

A shielding member movable in a vertical direction may be disposed in the opening and closing portion, a case rib protruding upward may be disposed in the passage, and when the water container is mounted in the case, the case rib may press against a lower surface of the shielding member to move the shielding member upward, thereby opening the opening and closing portion.

The shielding member may include a shaft movable in the vertical direction, an O-ring surrounding an upper circumference of the shaft, and a spring surrounding a circumference of the shaft disposed below the O-ring.

When the water container is mounted in the case, the spring may be compressed upward and the O-ring may be spaced apart from the opening and closing portion to open the opening and closing portion, and when the water container is removed from the case, the spring may expand downward to return the O-ring downward to its original position, thereby closing the opening and closing portion.

The opening and closing portion may further include a connection part protruding downward from the bottom surface of the water container, and the shielding member may be disposed inside the connection part and may move vertically along the connection part.

The passage may include a sealing ring surrounding the connection part, and a ring case which is disposed so as to cover the sealing ring and fixes the sealing ring.

The ring case may be hook-coupled to the case.

The opening and closing portion and the passage may be disposed to vertically overlap each other.

The pump may be disposed so as not to vertically overlap with the passage, and the pump may be disposed behind the passage.

The bottom surface may include an inclined surface which is inclined downward toward the opening and closing portion.

The water container may be detachably attached to the case by a horizontal movement method.

The water container may be mounted in the case by sliding in a horizontal direction and then sliding downward and diagonally.

The case may include a guide rail part which guides the sliding movement of the water container, the guide rail part may include a horizontal opening which is open in the horizontal movement direction of the water container, and an inclined opening which is open in the diagonal movement direction of the water container, and the water container may include a protruding guide which moves along the horizontal opening and the inclined opening.

The water container may include an opening and closing portion disposed on a bottom surface thereof, and when the water container is mounted in the case, the opening and closing portion may communicate with a passage formed in the case, and the opening and closing portion and the passage may be disposed so as to be inclined in the diagonal movement direction of the water container.

The bottom surface may include an inclined surface which is inclined downward toward the opening and closing portion.

### Advantageous Effects

A refrigerator according to the present invention is provided with a water container assembly that can be supported by a shelf within a storage chamber, thereby increasing a degree of freedom in utilizing a space within the storage chamber when the water container assembly is mounted.

In this case, the water container assembly has an effect of increasing a degree of freedom in structure such that a user can freely select and mount a shelf, among a plurality of shelves in the storage chamber on which the user desires to mount the water container assembly.

In addition, since the refrigerator according to the present invention provides an assembly structure in which the water container assembly, which can be supported by the shelf within the storage chamber, accommodates and fixes the water container and the pump together, the water container and the pump can be easily moved and mounted together at desired positions.

In addition, the refrigerator according to the present invention allows an opening and closing portion of the water container, which is detachably attached to a case by a vertical or horizontal movement method, to be selectively opened and closed so that the water stored in the water container can be supplied to the pump without interruption, thereby smoothly operating the pump that pumps the water stored in the water container to the ice maker.

Specific effects together with the above effects have been described together with a description of the following detailed matters for carrying out the invention.

### BRIEF DESCRIPTION OF THE DRAWINGS

FIG. 1 is a perspective view of a refrigerator with a door closed.
FIG. 2 is a front view of the refrigerator according to one embodiment with the door open.
FIG. 3 is a side cross-sectional view of the refrigerator according to one embodiment.
FIG. 4 is an exploded perspective view of a water container assembly.
FIG. 5 is an exploded perspective view of a water container viewed from below.
FIGS. 6 and 7 are cross-sectional views of the water container viewed from the front and side, respectively.
FIG. 8 is a cross-sectional view with the water container mounted in a case.
FIGS. 9 and 10 show a process of mounting the water container in the water container assembly that is detachably attached by a vertical movement method.
FIGS. 11 to 13 show a process of mounting the water container in the water container assembly that is detachably attached by a horizontal movement method.
FIG. 14 is a front view of a refrigerator according to another embodiment with the door removed.
FIG. 15 is a side cross-sectional view of the refrigerator according to another embodiment, and FIG. 16 is an enlarged view of one side surface of FIG. 15.

### DETAILED DESCRIPTION OF THE INVENTION

The above-described objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

Although "first," "second," and the like are used to describe various components, these components are not limited by these terms. These terms are used only to distinguish one component from another, and unless otherwise stated, it is obvious that a first component may be a second component.

Throughout the specification, unless otherwise stated, each component may be singular or plural.

Hereinafter, the arrangement of an arbitrary component on an "upper portion (or lower portion)" of a component or "above (or under)" the component may not only mean that the arbitrary component is disposed in contact with an upper surface (or a lower surface) of the component, but also mean that other components may be interposed between the component and the arbitrary component disposed above (or under) the component.

In addition, when a certain component is described as being "connected," "coupled," or "joined" to the other component, the components may be directly connected or joined, but it should be understood that another component may be "interposed" between the components, or the components may be "connected," "coupled," or "joined" through another component.

The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

Throughout the specification, when "A and/or B" is described, this means A, B, or A and B unless otherwise specified, and when "C to D" is described, this means C or more and D or less unless otherwise specified.

Hereinafter, a refrigerator according to some embodiments of the present invention will be described.

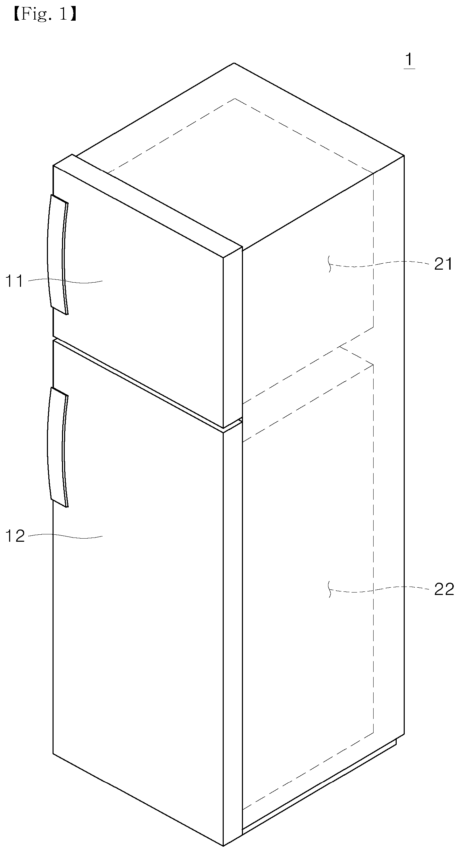

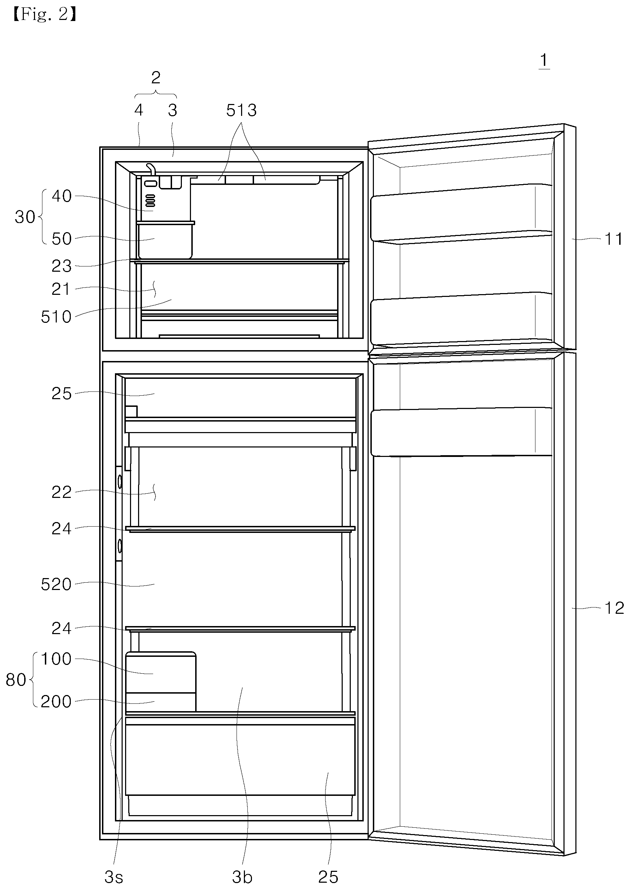

First, a refrigerator, a water container assembly, and connection relationships between major components constituting them according to one embodiment will be described with reference to FIGS. 1 to 3.

A refrigerator 1 may have an appearance formed by a cabinet 2 including one or more storage chambers, which function as product storage spaces, and one or more doors 11 and 12 that may open and close an open front surface of the cabinet 2.

The cabinet 2 may include an outer case 4 forming an outer surface of the refrigerator 1 and an inner case 3 forming an inner surface thereof.

The outer case 4 and the inner case 3 may be formed to have a spaced-apart space, and the spaced-apart space may be filled with an insulating material to form a foaming region 5.

An inner side of the inner case 3 may be divided into one or more storage spaces.

The inner case 3 may include one or more storage chambers, for example, a first storage chamber 21 and a second storage chamber 22 partitioned by a partition wall 6 and disposed in a vertical direction.

For example, the first storage chamber 21 disposed at the top may be a freezer chamber, and the second storage chamber 22 disposed at the bottom may be a refrigeration chamber.

However, the positions of the first storage chamber 21 and the second storage chamber 22 are not limited thereto, and in other embodiments, the positions of the first storage chamber 21 and the second storage chamber 22 may be swapped and disposed parallel to each other in a left-right direction.

The first storage chamber 21 may be opened and closed by one or more first doors 11, and the second storage chamber 22 may be opened and closed by one or more second doors 12.

An evaporator 511 for generating cold air through heat exchange may be disposed in front of an inner rear surface of the first storage chamber 21.

A first grille fan assembly 510 for supplying the cold air generated by the evaporator 511 to the first storage chamber 21 may be disposed in front of the evaporator 511.

The first grille fan assembly 510 may include a blower fan 512 for blowing the cold air generated by the evaporator 511, and one or more cold air outlets 513 for discharging the cold air blown by the blower fan 512 into the first storage chamber 21.

For example, the one or more cold air outlets 513 extending in the left-right direction may be disposed in an upper region of the first grille fan assembly 510.

A second grille fan assembly 520 for guiding the cold air received from the first grille fan assembly 510 to be discharged into the second storage chamber 22 may be disposed in front of an inner rear surface of the second storage chamber 22.

For example, the cold air from the first grille fan assembly 510 may be guided to the second grille fan assembly 520 through a cold air flow path passing through the partition wall 6.

The first storage chamber 21 and the second storage chamber 22 may include one or more storage drawers 25 and/or one or more shelves 23 and 24 to easily accommodate and store objects to be stored.

For example, the one or more first shelves 23 and the one or more second shelves 24 may be disposed in the first storage chamber 21 and the second storage chamber 22, respectively.

The first shelf 23 may be formed to extend in a horizontal direction of the first storage chamber 21.

For example, a pair of shelf supports 26 capable of supporting and fixing the first shelf 23 may be disposed on opposite inner sides of the first storage chamber 21.

The pair of shelf supports 26 may support lower surfaces of opposite end portions of the first shelf 23, respectively.

However, the present invention is not limited thereto, and the first shelf 23 may be fixed to a rear surface of the first storage chamber 21, and for example, a fixing structure supporting a rear surface of the first shelf 23 may be formed on a front surface of the first grille fan assembly 510.

In addition, since the one or more second shelves 24 disposed in the second storage chamber 22 may also be disposed in the same manner as the first shelf 23 of the first storage chamber 21, a detailed description thereof will be omitted.

Meanwhile, an ice maker module 30 may be disposed in the first storage chamber 21.

The ice maker module 30 may include an ice maker 40 for generating ice and an ice storage bin 50 for storing ice discharged from the ice maker 40 after an ice-making process.

The ice storage bin 50 may be formed in the shape of a basket capable of storing ice and disposed below the ice maker 40.

The ice maker module 30 may be disposed on the first shelf 23.

For example, a lower surface of the ice storage bin 50 may be supported by an upper surface of the first shelf 23.

Accordingly, the ice storage bin 50 may be movable such that the ice storage bin 50 is slidably withdrawn from and inserted into the first shelf 23 in a front-rear direction, thereby allowing a user to easily take out ice.

The ice maker 40 may be fixedly fastened to an inner lower portion of an upper surface of the first storage chamber 21.

A water container assembly 80 for supplying water to the ice maker 40 may be disposed in the second storage chamber 22, which differs from the first storage chamber 21 in which the ice maker module 30 is disposed.

The water container assembly 80 may be disposed on a second shelf 24.

The water container assembly 80 may include a case 200 and a water container 100 disposed on the case 200.

For example, a lower surface of the water container assembly 80 may be supported by an upper surface of the second shelf 24.

The water container assembly 80 may be disposed to be in contact with a rear surface 3b and one side surface 3s inside the second storage chamber 22, but is not limited thereto.

For example, the water container assembly 80 may be disposed to be in contact with only one of the rear surface 3b and the one side surface 3s inside the second storage chamber 22.

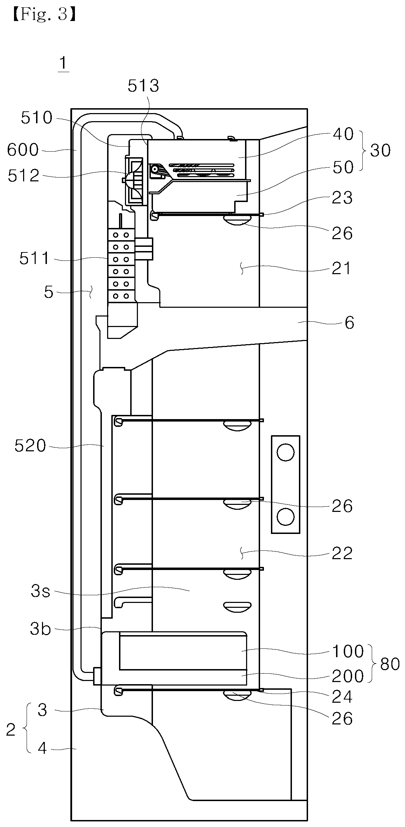

In FIG. 3, a water supply pipe 600 for supplying water to the ice maker module 30 through a through-hole formed in the rear surface 3b inside the second storage chamber 22 is shown as one embodiment, but this is not limited thereto, and the water supply pipe 600 may pass through a through-hole formed in the one side surface 3s inside the second storage chamber 22.

The water supply pipe 600 may be disposed in the foaming region 5 formed between the inner case 3 and the outer case 4, and at least a portion of the water supply pipe 600 may be embedded in the foaming region 5.

The water supply pipe 600 may be formed to extend vertically along the rear surfaces of the first storage chamber 21 and the second storage chamber 22.

The water supply pipe 600 may be configured as a single integrated body pipe, but is not limited thereto, and may also be configured as a plurality of body pipes connected by a plurality of connecting pipes.

For example, one side of the water supply pipe 600 may communicate with the water container assembly 80 through the rear surface of the second storage chamber 22 to receive water.

In addition, the other side of the water supply pipe 600 may communicate with the ice maker 40 through the upper surface of the first storage chamber 21 to allow the water received from the water container assembly 80 to flow to the ice maker 40.

When the other side of the water supply pipe 600 communicates with the ice maker 40 through the upper surface of the first storage chamber 21, a water supply speed can be increased, thereby preventing the water from freezing during flow.

However, the present invention is not limited thereto, and the other side of the water supply pipe 600 may communicate with the ice maker 40 through the rear surface of the first storage chamber 21, thereby allowing the water received from the water container assembly 80 to flow to the ice maker 40.

In this way, since the water container assembly 80 is disposed in the second storage chamber 22 disposed below the first storage chamber 21 in which the ice maker 40 is disposed, the water container assembly 80 may be disposed below the ice maker 40.

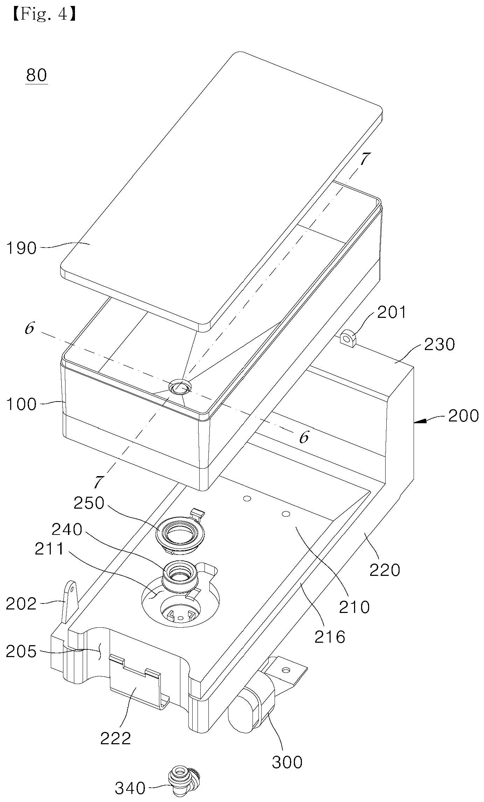

Hereinafter, the water container assembly 80 according to the present invention will be described in more detail with further reference to FIGS. 4 to 10.

The water container 100 may be formed in a substantially box shape so as to provide a water storage space.

For example, the water container 100 may include a storage bin 110, which is a space formed by a bottom surface 111 formed on a lower surface thereof and an upper finishing wall 204 extending upward along a perimeter of the bottom surface 111 and storing water.

The storage bin 110 may be formed to have an open upper surface, and water may be supplied through the open upper surface of the storage bin 110 and stored in the storage bin 110.

A water container cover 190 may be disposed above the water container 100 to cover the open upper surface of the storage bin 110.

The water container cover 190 can prevent contaminants from entering the water container 100.

A lower finishing wall 203 may be formed to extend downward along the perimeter of the bottom surface 111 of the water container 100.

A recessed space 120 having a predetermined height may be formed in a lower surface of the bottom surface 111.

A portion of an upper portion of the case 200, which will be described below, may be inserted into the recessed space 120 of the water container 100, and thus, the water container 100 can be stably seated and fixed on the case 200.

In this way, as the portion of the upper portion of the case 200 is inserted into the recessed space 120 of the water container 100, the water container 100 can be prevented from being detached from the case 200 in the horizontal direction.

With respect to the bottom surface 111, a height of the upper finishing wall 204 may be formed to be greater than a height of the lower finishing wall 203, and thus, the storage bin 110 may be formed to have a space with a greater volume than the recessed space 120.

On the bottom surface 111 of the water container 100, an opening and closing portion 112 may be formed to function as a passage through which the water stored in the storage bin 110 may be supplied to the outside through the bottom surface 111 of the water container 100.

For example, the opening and closing portion 112 may be preferably disposed toward a front side of the water container 100 in the front-rear direction.

The water supplied through the opening and closing portion 112 may be supplied to a pump 300 to be described below, and the water passing through the pump 300 may be supplied to the ice maker module 30 through the water supply pipe 600 connected through the rear surface 3b of the second storage chamber 22.

In this way, a water flow path connected to the opening and closing portion 112, the pump 300, the rear surface 3b of the second storage chamber 22, and the water supply pipe 600 can be formed as efficiently as possible to ensure a smooth supply of water.

The opening and closing portion 112 may be formed as a through-hole extending downward from the bottom surface 111.

The opening and closing portion 112 may be formed to be recessed to a predetermined height downward from the bottom surface 111.

Accordingly, the opening and closing portion 112 may be formed as a recessed space disposed below an upper surface of the bottom surface 111.

The opening and closing portion 112 may be formed to have a circular shape having a predetermined inner diameter when viewed from above, but is not limited thereto.

A connection part 130 may be formed to extend downward from the bottom surface 111 corresponding to the opening and closing portion 112.

The connection part 130 may be formed to have a circular shape having a predetermined inner diameter when viewed from above, and thus, the connection part 130 may be formed to have an overall cylindrical shape.

A lowest end of the connection part 130 may be aligned with a lowest end of the lower finishing wall 203, or may extend so as to be disposed above the lowest end of the lower finishing wall 203.

An inner diameter of the connection part 130 may be formed to be smaller than an inner diameter of the opening and closing portion 112.

A stepped portion 113 may be formed between the opening and closing portion 112 and the connection part 130.

The stepped portion 113 may be disposed to protrude inward from a boundary between the opening and closing portion 112 and the connection part 130.

An inner diameter of the stepped portion 113 may be formed to be smaller than the inner diameter of the opening and closing portion 112 and the inner diameter of the connection part 130.

Accordingly, the stepped portion 113 may function as a stopper between the opening and closing portion 112 and the connection part 130.

The opening and closing portion 112 formed in this way may communicate with the connection part 130 to allow the water stored in the storage bin 110 to flow through the opening and closing portion 112 to the connection part 130.

However, since the opening and closing portion 112 and the connection part 130 are open, a shielding member 140 capable of closing the opening and closing portion 112 and the connection part 130 when water is to be stored may be provided.

The shielding member 140 configured to selectively move in a vertical direction may be disposed at the opening and closing portion 112 and the connection part 130.

The shielding member 140 may include a shaft 141 disposed inside the opening and closing portion 112 and the connection part 130 to form a body of the shielding member 140.

The shaft 141 may be formed to have an outer diameter smaller than the inner diameter of the connection part 130 so as to move in the vertical direction inside the connection part 130.

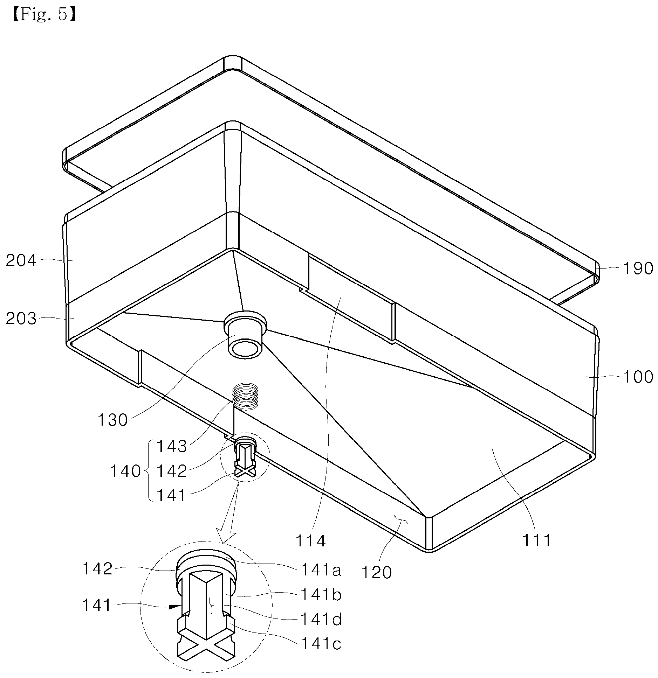

For example, referring to FIGS. 5 to 7, the shaft 141 may include a head portion 141a disposed at an upper end thereof, a plurality of wing portions 141b extending downward from the head portion 141a, and a protrusion 141c formed to protrude outward from a lower end of each of the wing portions 141b.

For example, an outer diameter of the head portion 141a may be formed to be smaller than the inner diameter of the stepped portion 113.

The head portion 141a may be formed to have a shape corresponding to the shape of the connection part 130.

Accordingly, when the connection part 130 has a cylindrical shape, the head portion 141a may also be formed to have a cylindrical shape or a disc shape.

An O-ring 142 may be disposed to surround an upper circumference of the shaft 141.

For example, the O-ring 142 may be disposed along a circumference of the head portion 141a of the shaft 141.

A seating groove to which the O-ring 142 may be coupled may be formed along the circumference of the head portion 141a.

The O-ring 142 functions to seal the opening and closing portion 112 and is preferably formed of an elastic material such as rubber.

An outer diameter of the O-ring 142 may be formed to be greater than the inner diameter of the stepped portion 113.

That is, adjacent wing portions 141b of the shaft 141 are disposed to be spaced apart from each other, and hollow regions 141d may be formed in spaces defined therebetween.

For example, each of the wing portions 141b may be formed to extend from a lower center of the head portion 141a toward the circumference of the head portion 141a.

For example, the wing portions 141b of the shaft 141 may be disposed to have an overall cross shape.

Accordingly, in the case of a lower portion of the head portion 141a, regions other than the regions of the wing portions 141b may be formed as the hollow regions 141d.

As the hollow region 141d is formed in this way, as will be described below, when the shielding member 140 moves upward, the water from the storage bin 110 may pass through the opening and closing portion 112 through the hollow regions 141d between the wing portions 141b of the shaft 141.

An elastic spring 143 may be disposed along the circumference of the wing portions 141b of the shaft 141.

The spring 143 may be disposed between the head portion 141a and the protrusion 141c.

That is, the spring 143 may be disposed to surround the circumference of the shaft 141 disposed below the O-ring 142.

An inner diameter of the spring 143 may be formed to be greater than the outer diameter of the wing portion 141b and smaller than an outer diameter of the protrusion 141c.

Accordingly, the protrusion 141c can prevent the spring 143 from being detached downward from the shaft 141.

The shielding member 140 formed in this way may be disposed in the water container 100 so as to be located at the opening and closing portion 112 and the connection part 130.

For example, in a state in which the shielding member 140 is coupled to the water container 100, at least a portion of the head portion 141a of the shielding member 140 and the O-ring 142 may be disposed above the stepped portion 113, and the wing portions 141b and protrusions 141c of the shielding member 140 and the spring 143 may be disposed below the stepped portion 113.

In this case, the O-ring 142 disposed along the circumference of the head portion 141a of the shaft 141 may be disposed so as to be in contact with an upper surface of the stepped portion 113.

Since an opening region of the opening and closing portion 112 is closed by the O-ring 142 of the shielding member 140 that performs a sealing function, the water stored in the storage bin 110 may be stored in the storage bin 110 without leaking to the outside.

In this way, the shielding member 140 that closes the opening and closing portion 112 may move upward to open the opening and closing portion 112.

Since the spring 143 is disposed along a circumference of the shielding member 140, when a lower surface of the shielding member 140 is pressed upward, the spring 143 is compressed upward to cause the shaft 141 to move upward.

When the shaft 141 moves upward in this way, the O-ring 142 of the head portion 141a that closes the opening and closing portion 112 also moves upward as contact with the stepped portion 113 is released, and thus, the opening and closing portion 112 may be opened.

In this case, since the wing portions 141b of the shaft 141 also pass through the connection part 130 and move upward to the upper portion of the opening and closing portion 112, the water in the storage bin 110 may be supplied to the outside of the water container 100 by passing through the opening and closing portion 112 and the connection part 130 through the hollow regions 141d formed in the side surface of the shaft 141.

When the shielding member 140 moves upward, a restoring force acts on the spring 143 to return the spring 143 to its original position.

Accordingly, when a pressing force pressing the lower surface of the shielding member 140 upward is removed, the spring 143 may expand again due to the restoring force of the spring 143 to cause the shielding member 140 to move downward again, and the O-ring 142 of the shaft 141 may close the opening and closing portion 112 to stop the supply of water to the outside of the water container 100.

Meanwhile, the bottom surface 111 of the water container 100 may be formed to include an inclined surface that is inclined downward toward the opening and closing portion 112.

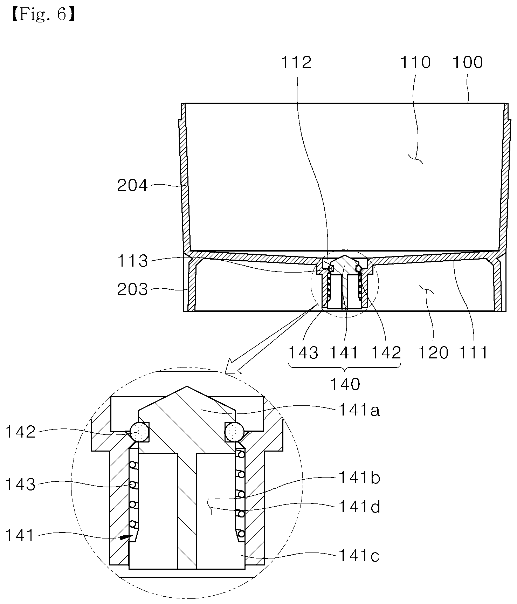

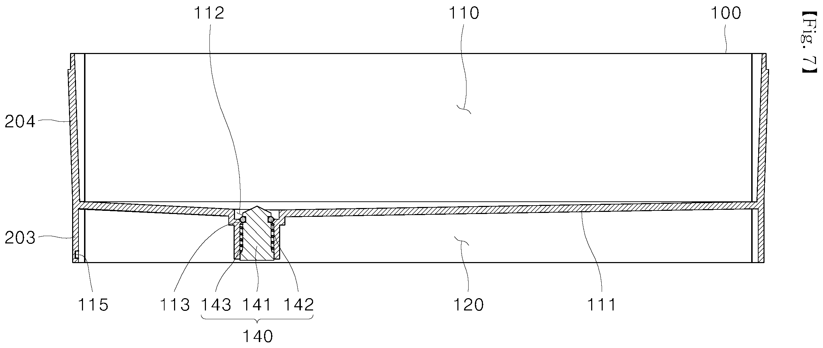

For example, referring to FIGS. 6 and 7, the bottom surface 111 of the water container 100 may have a gradient such that a region in which the opening and closing portion 112 is disposed forms a lowest end and the bottom surface 111 of the water container 100 in contact with the upper finishing wall 204 forms a highest end.

In this way, as the bottom surface 111 of the water container 100 is inclined downward toward the opening and closing portion 112, the structure of the water container 100 capable of removing as much residual water as possible from the water container 100 and preventing water accumulation may be provided.

A hook engagement part 115 may be formed on a rear surface of the lower finishing wall 203 disposed at the front of the water container 100.

The hook engagement part 115 may be fastened to a front hook 222 of the case 200 to be described below.

A handle part 114 may be formed on the side surface of the water container 100 so that a user can easily grasp the water container 100, thereby improving the user's grip on the water container 100.

For example, the handle part 114 may be formed such that portions of the lower finishing walls 203 formed on opposite side surfaces are formed to be recessed inward, thereby allowing the user to easily lift or move the water container 100.

Meanwhile, the case 200 may include an upper finishing portion 210 inserted into the recessed space 120 of the water container 100 and a lower support 220 extending downward from the upper finishing portion 210.

The upper finishing portion 210 may finish an upper surface of the case 200, and the lower support 220 may support the case 200 disposed on the second shelf 24.

The lower support 220 may be formed to protrude further outward than the upper finishing portion 210.

Accordingly, an engagement portion 216 may be formed on a boundary surface between the lower support 220 and the upper finishing portion 210.

The engagement portion 216 formed in this way may support a lower portion of the lower finishing wall 203 of the water container 100 when the water container 100 is coupled to the upper portion of the case 200.

The upper finishing portion 210 may include a front region forming a horizontal plane and a rear region forming an inclined plane that is inclined downward toward the rear surface thereof, but is not limited thereto.

When the case 200 is in contact with the one side surface 3s of the second storage chamber 22, a side fastening portion 202 may be formed on the upper finishing portion 210 adjacent to the one side surface 3s of the second storage chamber 22 so that the case 200 may be fixed to the one side surface 3s of the second storage chamber 22.

The side fastening portion 202 may be formed to protrude upward from the upper finishing portion 210.

The side fastening portion 202 may include a fastening hole and may be fastened to the one side surface 3s of the second storage chamber 22 through a separate fastening member to fix the case 200 to the second storage chamber 22.

A rear finishing portion 230 may be formed on the rear surface of the upper finishing portion 210 and the lower support 220.

When the case 200 is in contact with the rear surface 3b of the second storage chamber 22, a rear fastening portion 201 may be formed on the rear finishing portion 230 to fix the case 200 to the rear surface 3b of the second storage chamber 22.

The rear fastening portion 201 may be formed to protrude upward from the rear finishing portion 230.

The rear fastening portion 201 may include a fastening hole and may be fastened to the rear surface 3b of the second storage chamber 22 through a separate fastening member to fix the case 200 to the second storage chamber 22.

The water supply pipe 600 for supplying the water from the water container assembly 80 to the ice maker module 30 may communicate with the water container assembly 80 through the rear finishing portion 230 of the case 200.

The front hook 222 may be formed in a front region of the case 200.

For example, a recess 205 that is recessed rearward from the case 200 by a predetermined distance may be formed in the front region of the case 200.

In the recess 205, the front hook 222 may be formed, which extends forward from a lower end of the case 200, is bent upward, and is provided with a hook to be hook-coupled at an upper end thereof.

The front hook 222 formed in this way may fix the water container 100 to the case 200 by being hook-coupled with the hook engagement part 115 disposed at the front of the water container 100.

For example, when the water stored in the storage bin 110 decreases, the water container 100 may be removed upward from the case 200 by an elastic repulsion force of the spring 143 included in the shielding member 140.

Accordingly, by connecting the water container 100 and the case 200 through hook-coupling, the coupling between the water container 100 and the case 200 can be maintained stably without being arbitrarily removed even when the water stored in the storage bin 110 decreases.

The user can easily remove the water container 100 from the case 200 by inserting a hand into the recess 205 and gently pushing the front hook 222 rearward to simply release the hook-coupling between the front hook 222 and the hook engagement part 115.

Interiors of the upper finishing portion 210 and the lower support 220 may be formed as an accommodation space 221 consisting of a hollow region.

The pump 300 may be disposed in the accommodation space 221.

That is, the pump 300 may be accommodated in the accommodation space 221 disposed at a lower portion of the case 200.

In this case, the pump 300 may be fastened to the case 200, and thus, may be assembled with the case 200 and moved together when the case 200 is moved.

For example, the pump 300 may include one or more pump fastening parts 330 that may be fastened and fixed to the lower surface of the upper finishing portion 210.

In this case, the pump fastening part 330 may be fastened to the upper finishing portion 210 using a separate fastening member, but is not limited thereto, and a separate hook coupling structure for hook-coupling may be formed on the upper finishing portion 210 and fastened to the pump fastening parts 330.

The pump 300 may allow the water from the water container 100 to flow to the ice maker 40 using pumping pressure.

For example, the pump 300 may be a gear water pump.

The gear water pump may be operated based on a principle in which water is suctioned and discharged by gears rotating at a constant speed.

More specifically, the gear water pump may pump water by a pressure difference between a suction side and a discharge side that occurs as a pair of gears mesh and rotate.

Whether the pump 300 operates may be controlled by a controller provided in the refrigerator 1.

The controller is a central control device that is provided within the refrigerator 1 and is responsible for various operations and functions of the refrigerator 1, and may include a microcontroller.

The pump 300 may include an inlet 310 through which the water supplied from the water container 100 enters and an outlet 320 through which water is discharged to the water supply pipe 600 for supplying water to the ice maker 40.

Meanwhile, a passage 211, which communicates with the connection part 130 of the water container 100 and provides a path through which the water supplied from the water container 100 passes, may be formed in the upper finishing portion 210 of the case 200.

When the water container 100 is mounted in the case 200, the opening and closing portion 112 of the water container 100 may communicate with the passage 211 formed in the case 200 through the connection part 130.

Accordingly, the opening and closing portion 112 and the passage 211 may be disposed to overlap each other in the vertical direction.

In addition, the pump 300 may be disposed behind the passage 211 so as not to overlap with the passage 211 in the vertical direction.

In this way, by efficiently arranging the pump 300, the opening and closing portion 112, and the passage 211 to increase space utilization, the accommodation space 221 disposed at the lower portion of the case 200 can be minimized, thereby reducing a volume of the water container assembly 80 other than the storage bin 110.

The passage 211 may be formed as a through-hole extending downward from the upper finishing portion 210.

The passage 211 may be formed to be recessed to a predetermined height downward from the upper finishing portion 210.

Accordingly, the passage 211 may be formed as a recessed space disposed below the upper surface of the bottom surface 111.

The passage 211 may be formed to have a circular shape having a predetermined inner diameter when viewed from above, but is not limited thereto.

An insertion pipe 215 may be formed to extend downward from the upper finishing portion 210 corresponding to the passage 211.

The insertion pipe 215 may be formed to have a circular shape having a predetermined inner diameter when viewed from above, and thus, the insertion pipe 215 may be formed to have an overall cylindrical shape.

The insertion pipe 215 may be connected to a connector 340.

For example, the connector 340 may be formed to have a bent shape, and may change the direction of movement of water passing through the insertion pipe 215 to a direction in which the pump 300 is disposed.

A lower end of the insertion pipe 215 may be inserted into one side of the connector 340.

In addition, the other side of the connector 340 may be connected to the inlet 310 of the pump 300.

In this case, a separate pipe may be disposed between the connector 340 and the inlet 310 of the pump 300 to connect the connector 340 and the pump 300.

A lowest end of the insertion pipe 215 may extend so as to be disposed above a lowest end of the lower support 220.

An inner diameter of the insertion pipe 215 may be formed to be smaller than an inner diameter of the passage 211.

A case rib 212 protruding upward may be formed in the passage 211.

When the water container 100 is mounted in the case 200, the case rib 212 may press against the lower surface of the shaft 141 of the shielding member 140 to move the shaft 141 of the shielding member 140 upward, thereby opening the opening and closing portion 112 of the water container 100.

For example, the case rib 212 may be provided as a plurality of case ribs spaced apart from each other by a predetermined distance in an upward direction along a circumference of the insertion pipe 215.

The case ribs 212 press against lower surfaces of the wing portions 141b of the shaft 141, and thus, may be disposed at positions corresponding to the wing portions 141b.

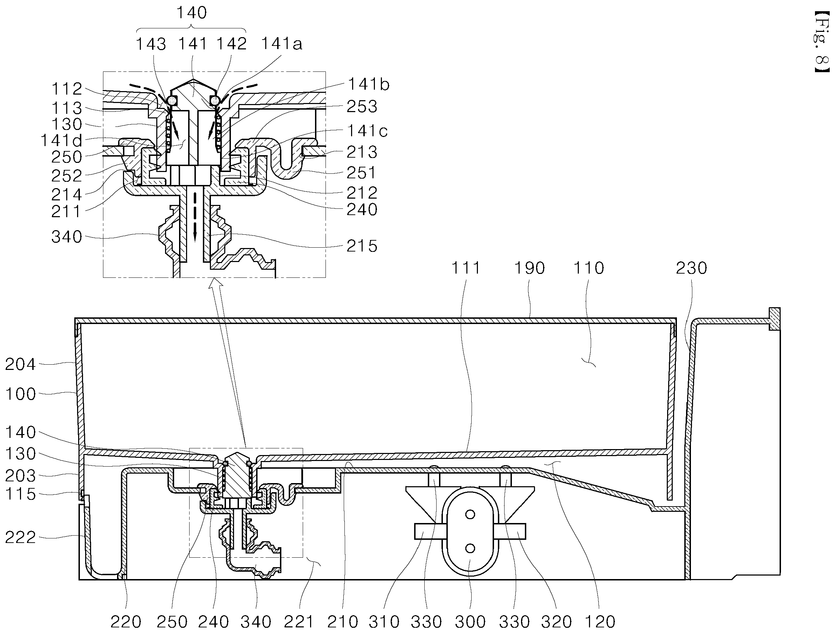

FIG. 8 shows a case in which, when the water container 100 is mounted in the case 200, the spring 143 of the shielding member 140 is compressed in the upward direction, and the O-ring 142 is spaced apart upward from the opening and closing portion 112 to open the opening and closing portion 112, thereby allowing the water from the storage bin 110 to move to the insertion pipe 215.

In addition, when the water container 100 is mounted in the case 200, a sealing ring 240 may be disposed so as to surround the lower region of the connection part 130 of the water container 100 inserted into the passage 211 in the passage 211.

The sealing ring 240 may have an inner diameter greater than the outer diameter of the connection part 130 so as to surround the connection part 130.

The sealing ring 240 is preferably formed of a material that may perform a sealing function and has high friction.

For example, the sealing ring 240 may be formed of a silicone material or a rubber material.

The sealing ring 240 may seal a connection portion to prevent water from leaking at the connection portion between the connection part 130 and the passage 211.

In addition, when the sealing ring 240 is formed of a material with high friction and surrounds a lower region of the connection part 130, the sealing ring 240 can prevent the connection part 130 from being easily separated from the sealing ring 240.

Accordingly, the sealing ring 240 may also function as a fixing member for fixing the water container 100 to the case 200.

The sealing ring 240 may be formed such that a plurality of rings are stacked inward and spaced apart from each other by a predetermined distance.

In this case, a ring case 250 that is disposed so as to cover the sealing ring 240 and fixes the sealing ring 240 may be disposed additionally.

An inner diameter of the ring case 250 may be formed to be greater than an outer diameter of the sealing ring 240.

The ring case 250 includes a ring case body part 253 that covers an upper edge of the sealing ring 240 and surrounds at least a portion of a side surface thereof, and an interior of the ring case body part 253 may be formed to have a hollow region so that the connection part 130 of the water container 100 may pass therethrough.

A first hook portion 251 may be formed on one side of the ring case body part 253, and a second hook portion 252 may be formed on the other side thereof.

For example, the first hook portion 251 may be formed to extend outward from an upper end of the one side of the ring case body part 253 and to be bent in a U-shape downward.

The ring case 250 may be formed of a plastic injection molded product having a predetermined elastic force.

The first hook portion 251 may be fastened to the upper finishing portion 210 of the case 200.

A first hook hole 213 vertically penetrating from the upper end to a rear outer side of the passage 211 may be formed in the upper finishing portion 210.

The passage 211 may be expanded and recessed in a shape corresponding to the first hook hole 213.

By hook-coupling the first hook portion 251 into the first hook hole 213, the one side of the ring case 250 may be fastened to the case 200.

The second hook portion 252 may be formed to protrude forward and outward from the other side of the ring case body part 253.

A second hook hole 214 penetrating in the front-rear direction may be formed in a front side surface of the passage 211 of the upper finishing portion 210.

By hook-coupling the second hook portion 252 into the second hook hole 214, the other side of the ring case 250 may be fastened to the case 200.

In this way, as the ring case 250 fixes the sealing ring 240 through hook-coupling, the ring case 250 can effectively prevent the sealing ring 240 from being displaced.

In addition, since the ring case 250 can be quickly and easily removed from the case 200 by slightly pressing the first hook portion 251 formed in a U-shape to have a predetermined elastic force, the sealing ring 240 can be easily removed after the ring case 250 is removed.

The sealing ring 240 removed in this way may be washed to enhance the hygiene effect of the water container assembly 80.

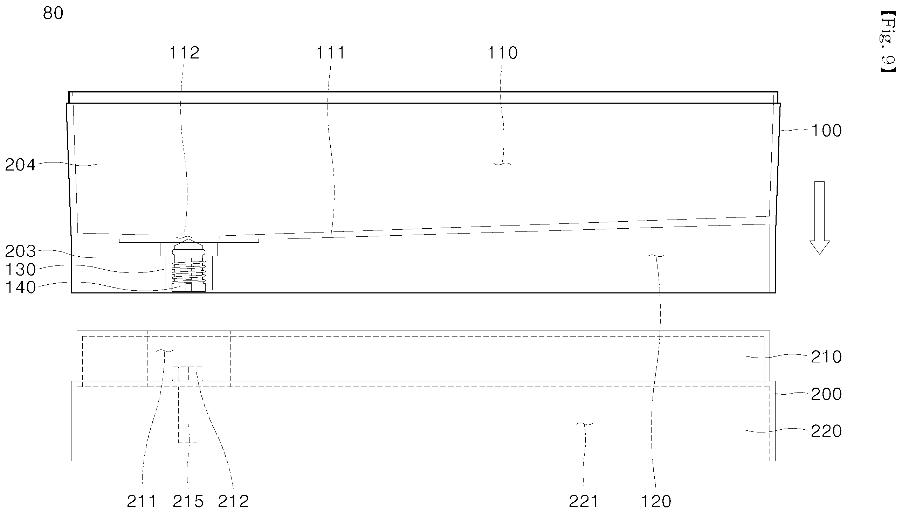

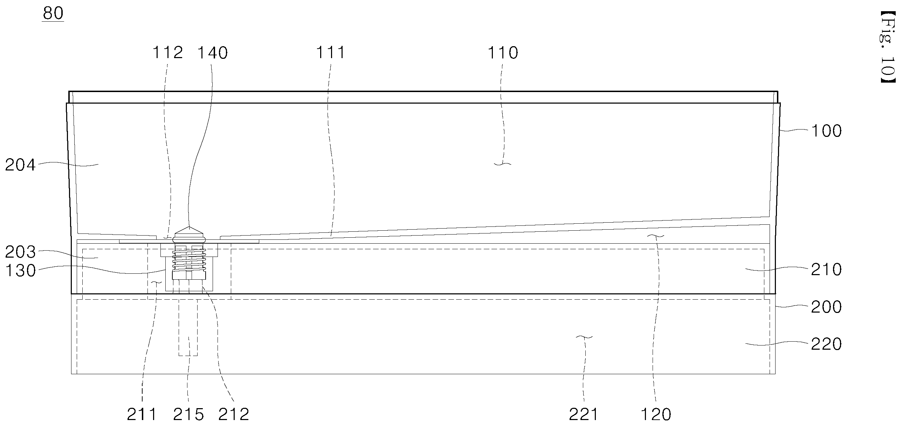

As shown in FIGS. 9 and 10, the water container 100 of the water container assembly 80 according to one embodiment of the present invention may be detachably attached to the case 200 by the vertical movement method.

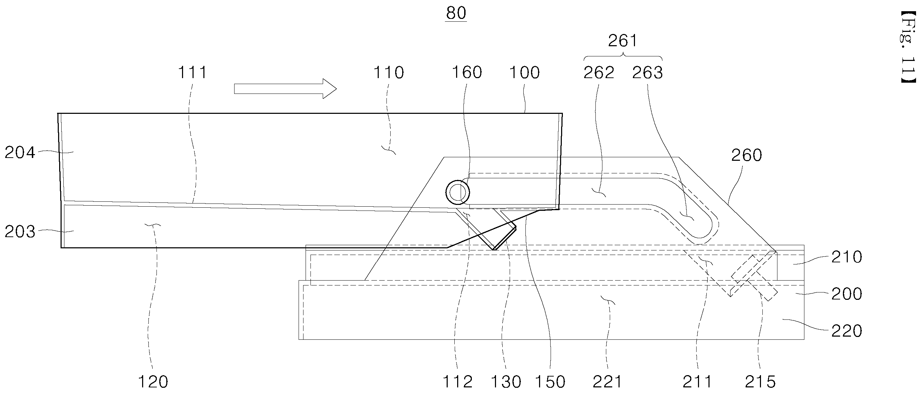

Meanwhile, a method of attaching and detaching the water container 100 and the case 200 of the water container assembly 80 according to another embodiment of the present invention will be described with reference to FIGS. 11 to 13.

The water container 100 of the water container assembly 80 according to one embodiment of the present invention may be detachably attached to the case 200 by the horizontal movement method.

The water container 100 may be mounted in the case 200 by sliding in a horizontal direction and then sliding in a downward diagonal direction.

The case 200 may include a guide rail part 260 that guides the sliding movement of the water container 100.

For example, the guide rail part 260 may be formed on the one side of the case 200 in the front-rear direction of the case 200, which is the horizontal movement direction of the water container 100.

The guide rail part 260 may be formed to extend upward near a boundary region between the upper finishing portion 210 and the lower support 220, and may be formed to protrude further upward than the upper finishing portion 210.

For example, the guide rail part 260 may be formed to have an overall trapezoidal shape, but is not limited thereto.

The guide rail part 260 may be formed on one side surface of the case 200, but is not limited thereto, and may be formed as a pair on opposite side surfaces of the case 200.

A guide opening 261, which is open so as to guide the movement path of the water container 100, may be formed in the guide rail part 260.

The guide opening 261 may include a horizontal opening 262 opened in the horizontal movement direction of the water container 100 and an inclined opening 263 opened in the diagonal movement direction of the water container 100.

The horizontal opening 262 may be disposed close to the front of the case 200, which is a direction in which the water container 100 is coupled, and the inclined opening 263 may be disposed behind the horizontal opening 262.

The horizontal opening 262 may be formed to have a length greater than that of the inclined opening 263.

The inclined opening 263 may be formed to be inclined diagonally rearward.

The horizontal opening 262 and the inclined opening 263 may be formed integrally so as to be continuously connected to each other.

On the one side surface of the water container 100, a protruding guide 160, which is inserted into the guide opening 261 of the case 200 and moves along the guide opening 261, may be formed.

In this way, as the protruding guide 160 of the water container 100 is inserted into the guide opening 261 of the case 200 and guided by the guide opening 261, the water container 100 may slide along the horizontal opening 262 and the inclined opening 263.

The passage 211 and the insertion pipe 215 may be formed on the upper finishing portion 210 of the case 200.

In this case, the passage 211 and the insertion pipe 215 may be formed so as to be inclined in the rear region of the case 200.

Specifically, the passage 211 and the insertion pipe 215 may be disposed behind the inclined opening 263, and may have an angle of inclination equal to an angle of inclination of the inclined opening 263.

Accordingly, the passage 211 and the insertion pipe 215 may also be disposed to be inclined diagonally downward.

The opening and closing portion 112 and the connection part 130 may be formed in the rear region of the water container 100.

The opening and closing portion 112 and the connection part 130 may be formed to be inclined downward in the rear region of the bottom surface 111.

In this case, the angle of inclination of the opening and closing portion 112 and the connection part 130 may be equal to the angle of inclination of the inclined opening 263.

Accordingly, the angle of inclination of the opening and closing portion 112 and the connection part 130 may have the same angle of inclination as the angle of inclination of the passage 211 and the insertion pipe 215.

Accordingly, the opening and closing portion 112 and the connection part 130 may also be disposed to be inclined diagonally downward.

The opening and closing portion 112 may be formed on the bottom surface 111 of the water container 100.

In addition, the rear end of the lower finishing wall 203 in which the connection part 130 is disposed may include a cutout 150 that is cut diagonally.

Accordingly, the connection part 130 may be formed to protrude further rearward than the cutout 150 of the lower finishing wall 203.

In this way, as the cutout 150 is formed, interference between the water container 100 and the case 200 that may occur when the water container 100 diagonally moves downward and is coupled with the case 200 can be prevented.

Referring to FIG. 11, the water container 100 may move horizontally with respect to the case 200 at the front of the case 200.

In this case, it is preferable to insert the water container 100 while aligning heights of the protruding guide 160 and the horizontal opening 262 so that the protruding guide 160 of the water container 100 may be inserted into the horizontal opening 262 of the case 200.

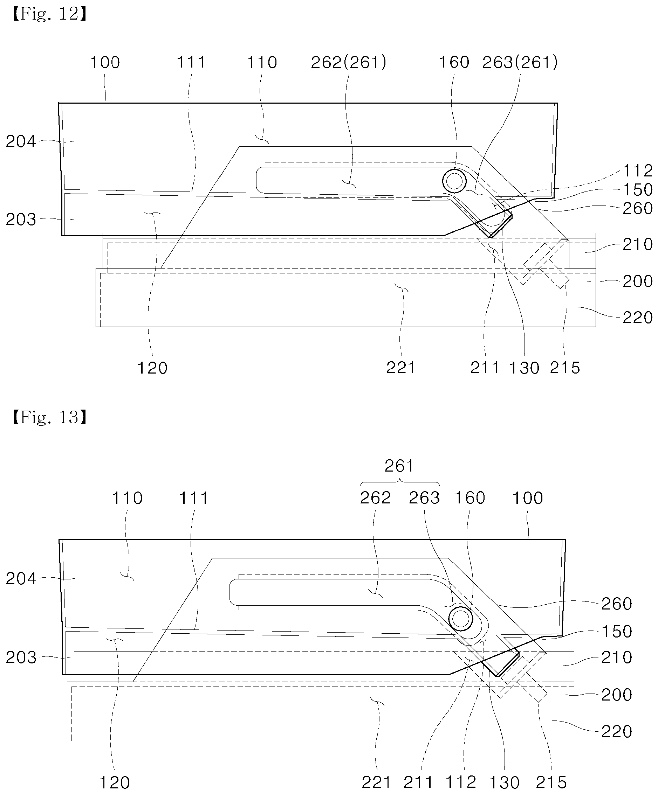

In this way, with the protruding guide 160 inserted into the horizontal opening 262, the water container 100 may slide horizontally to a connection point between the horizontal opening 262 and the inclined opening 263 as shown in FIG. 12.

In addition, as shown in FIG. 13, the protruding guide 160 diagonally moves downward along the inclined opening 263.

Accordingly, the water container 100 diagonally moves downward along the inclined opening 263 and is mounted in the case 200.

In this way, when the water container 100 is mounted in the case 200, the opening and closing portion 112 and the passage 211, which are disposed to be inclined in the diagonal movement direction of the water container 100, may communicate with each other.

Since the case in which the opening and closing portion 112 and the passage 211 communicate with each other to supply the water from the storage bin 110 is the same as that described above, a detailed description thereof will be omitted.

In this way, when the water container 100 is coupled to the case 200 by the sliding movement method rather than the vertical movement method, it is easy to install the water container assembly 80 in a space having a low height, and the space utilization of the storage chamber can be increased.

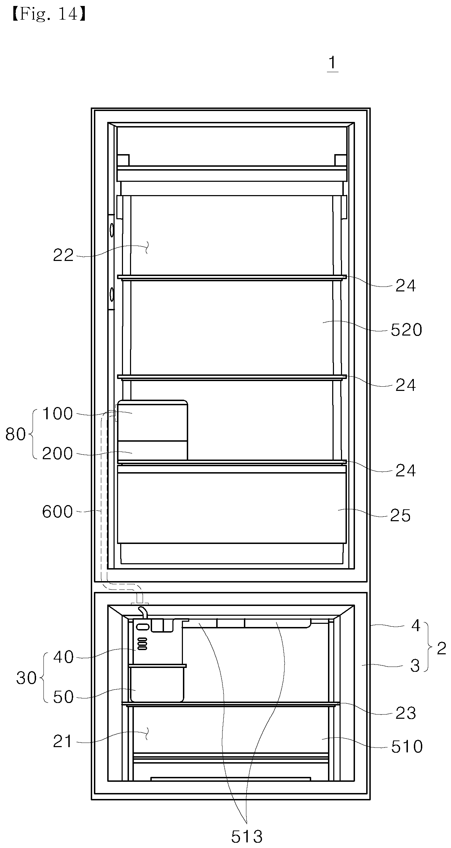

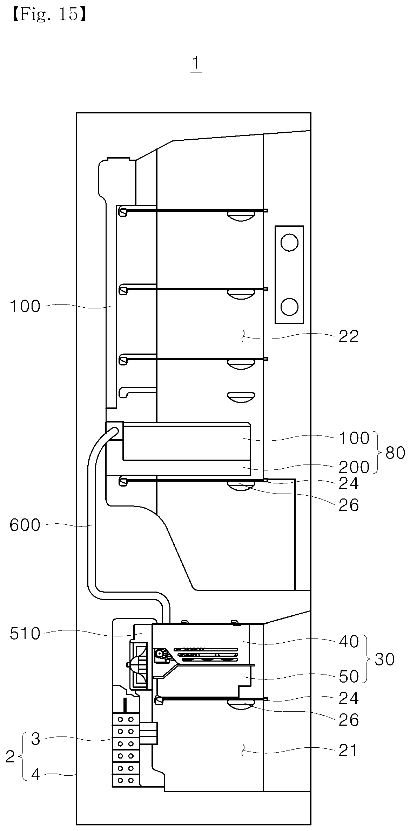

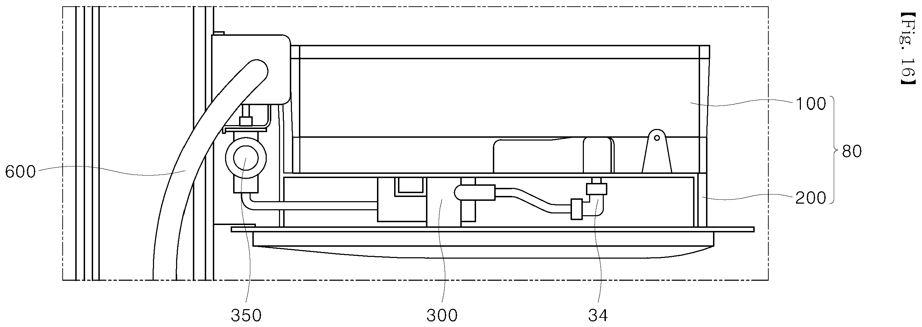

Referring to FIGS. 14 to 16, in another embodiment, the water container assembly 80 may be disposed above the ice maker module 30.

The second storage chamber 22 in which the water container assembly 80 is disposed may be disposed on the first storage chamber 21 in which the ice maker module 30 is disposed.

In this case, the second storage chamber 22 may be a refrigeration chamber, and the first storage chamber 21 may be a freezer chamber.

However, when the water container assembly 80 that supplies water is disposed above the ice maker module 30 that receives water, a siphon phenomenon may occur in which, when the pump 300 operates and the water from the water container 100 begins to be supplied, the flow of water does not stop even after the operation of the pump 300 is stopped and continues to flow.

Accordingly, when the water container assembly 80 is disposed above the ice maker module 30, a water valve 350 that communicates with the pump 300 to control whether water is supplied may be disposed additionally.

In this case, the water valve 350 may be mounted in the case 200 and included in the water container assembly 80.

Accordingly, the water from the water container 100 may be supplied to the ice maker module 30 through the connector 340, the pump 300, and the water valve 350.

One side of the water supply pipe 600 that supplies water from the water container assembly 80 to the ice maker module 30 may be connected by penetrating one side surface of the water container assembly 80 and one side surface of the second storage chamber 22.

In addition, the other side of the water supply pipe 600 may be connected to the ice maker module 30 by passing through the foaming region between the second storage chamber 22 and the first storage chamber 21 and penetrating the upper surface of the first storage chamber 21.

In the refrigerator according to the present invention as described above, a water container assembly that may be supported by a shelf within a storage chamber may be mounted, thereby increasing a degree of freedom in utilizing a space within the storage chamber when the water container assembly is mounted.

In this case, the water container assembly has an advantage of providing a structure that allows a user to freely select and mount the shelf to which the user wishes to mount the water container assembly among a plurality of shelves disposed in the storage chamber.

In addition, since the refrigerator according to the present invention provides an assembly structure in which the water container assembly, which can be supported by the shelf within the storage chamber, accommodates and fixes the water container and the pump together, the water container and the pump can be easily moved and mounted together at desired positions.

In addition, the refrigerator according to the present invention allows an opening and closing portion of the water container, which is detachably attached to a case by a vertical or horizontal movement method, to be selectively opened and closed so that the water stored in the water container can be supplied to the pump without interruption, thereby smoothly operating the pump that pumps the water stored in the water container to the ice maker.

Although the present invention has been described above with reference to exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

### [Description of Reference Numerals]

1: refrigerator
2: cabinet
3: inner case
3b: rear surface
3s: side surface
4: outer case
5: foaming region
6: partition wall
11: first door
12: second door
21: first storage chamber
22: second storage chamber

## Claims

1. A refrigerator comprising:
a cabinet including one or more storage chambers;
one or more shelves within the storage chamber; and
a water container assembly supported by the shelves and disposed within the storage chamber.

2. The refrigerator of claim 1, wherein the water container assembly includes:
a case;
a water container disposed on the case; and
a pump fastened to the case.

3. The refrigerator of claim 2, wherein a lower portion of the case has an accommodation space in which the pump is disposed.

4. The refrigerator of claim 2, wherein the case is disposed to be in contact with a rear surface and one side surface of the storage chamber.

5. The refrigerator of claim 2, further comprising an ice maker disposed in a storage chamber different from the storage chamber in which the water container assembly is disposed,
wherein the water container assembly is disposed below the ice maker.

6. The refrigerator of claim 2, further comprising an ice maker disposed in a storage chamber different from the storage chamber in which the water container assembly is disposed,
wherein the water container assembly is disposed above the ice maker.

7. The refrigerator of claim 6, wherein a water valve communicating with the pump is further disposed in the case.

8. The refrigerator of claim 2, wherein the water container is detachably attached to the case by a vertical movement method.

9. The refrigerator of claim 8, wherein the water container includes an opening and closing portion disposed on a bottom surface thereof, and
when the water container is mounted in the case, the opening and closing portion communicates with a passage formed in the case.

10. The refrigerator of claim 9, wherein a shielding member movable in a vertical direction is disposed in the opening and closing portion,
a case rib protruding upward is disposed in the passage, and
when the water container is mounted in the case, the case rib presses against a lower surface of the shielding member to move the shielding member upward, thereby opening the opening and closing portion.

11. The refrigerator of claim 10, wherein the shielding member includes:
a shaft movable in the vertical direction;
an O-ring surrounding an upper circumference of the shaft; and
a spring surrounding a circumference of the shaft disposed below the O-ring,
when the water container is mounted in the case, the spring is compressed upward and the O-ring is spaced apart from the opening and closing portion to open the opening and closing portion, and
when the water container is removed from the case, the spring expands downward to return the O-ring downward to its original position, thereby closing the opening and closing portion.

12. The refrigerator of claim 10, wherein the opening and closing portion further includes a connection part protruding downward from the bottom surface of the water container, and
the shielding member is disposed inside the connection part and moves vertically along the connection part.

13. The refrigerator of claim 12, wherein the passage includes a sealing ring surrounding the connection part, and a ring case which is disposed so as to cover the sealing ring and fixes the sealing ring.

14. The refrigerator of claim 13, wherein the ring case is hook-coupled to the case.

15. The refrigerator of claim 9, wherein the opening and closing portion and the passage are disposed to vertically overlap each other.

16. The refrigerator of claim 9, wherein the pump is disposed so as not to vertically overlap with the passage, and
the pump is disposed behind the passage.

17. The refrigerator of claim 9, wherein the bottom surface includes an inclined surface which is inclined downward toward the opening and closing portion.

18. The refrigerator of claim 2, wherein the water container is detachably attached to the case by a horizontal movement method.

19. The refrigerator of claim 18, wherein the water container is mounted in the case by sliding in a horizontal direction and then sliding downward and diagonally.

20. The refrigerator of claim 19, wherein the case includes a guide rail part which guides the sliding movement of the water container,
the guide rail part includes a horizontal opening which is open in the horizontal movement direction of the water container, and an inclined opening which is open in the diagonal movement direction of the water container, and
the water container includes a protruding guide which moves along the horizontal opening and the inclined opening.

21. The refrigerator of claim 20, wherein the water container includes an opening and closing portion disposed on a bottom surface thereof, and
when the water container is mounted in the case, the opening and closing portion communicates with a passage formed in the case, and
the opening and closing portion and the passage are disposed so as to be inclined in the diagonal movement direction of the water container.

22. The refrigerator of claim 21, wherein the bottom surface includes an inclined surface which is inclined downward toward the opening and closing portion.
